# EUROPEAN PATENT SPECIFICATION

(11) **EP 2 034 677 B1**
(45) Date of publication and mention of the grant of the patent: **29.09.2010**
(21) Application number: 07764141.3
(22) Date of filing: 29.06.2007
(51) Int. Cl.: H04L 12/58

(54) **A MULTIMEDIA MESSAGE GROUP SENDING SYSTEM AND THE METHOD THEREOF**
SYSTEM UND VERFAHREN ZUR GRUPPENSENDUNG VON MULTIMEDIA-NACHRICHTEN
SYSTÈME D'ENVOI GROUPÉ DE MESSAGES MULTIMÉDIA ET PROCÉDÉ ASSOCIÉ

(30) Priority: 29.06.2006 CN 200610061444; 28.09.2006 CN 200610159650
(43) Date of publication of application: 11.03.2009
(73) Proprietor: Huawei Technologies Co., Ltd., Longgang District, Shenzhen Guangdong 518129 (CN)
(72) Inventor: BAI, Guangchang, Guangdong 518129 (CN); CHENG, Weiming, Guangdong 518129 (CN); XIA, Yuwei, Guangdong 518129 (CN); CHEN, Jie, Guangdong 518129 (CN)
(74) Representative: Hengelhaupt, Jürgen
(86) International application number: PCT/CN2007/070212
(87) International publication number: WO 2008/003268

(56) References cited:
- WO-A-02/08852
- WO-A2-02/08852
- CN-A- 1 596 402
- CN-A- 1 735 077
- US-A1- 2002 198 944
- US-A1- 2005 143 106
- "Digital cellular telecommunications system (Phase 2+); Universal Mobile Telecommunications System (UMTS); Multimedia Messaging Service (MMS); Functional description; Stage 2 (3GPP TS 23.140 version 6.13.0 Release 6); ETSI TS 123 140" ETSI STANDARDS, LIS, SOPHIA ANTIPOLIS CEDEX, FRANCE, vol. 3-T2, no. V6.13.0, 1 June 2006 (2006-06-01), XP014035458 ISSN: 0000-0001

## Description

### FIELD OF THE INVENTION

The present invention relates to the wireless network communication field, and in particular, to a method and a system for transmitting Multimedia Message Service(MMS) in groups.

### BACKGROUND

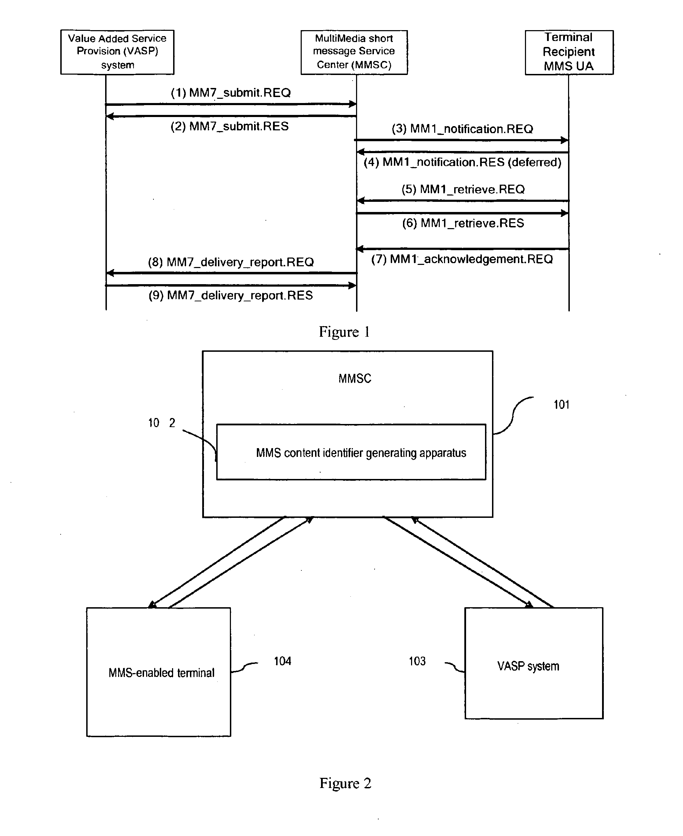

Multimedia Message Service (MMS) evolves from the Short Message Service (SMS) and the Enhanced Message Service (EMS), and provides a complete end-to-end solution to personal multimedia mobile telecommunications services. From the perspective of communication contents, a multimedia message includes images, audio, video and data; from the perspective of functions, the MMS covers multimedia message communication from terminal to terminal, from a terminal to an application device, and from an application device to a terminal. It not only implements delivery of messages between different terminals, between a terminal and an application device, but also accomplishes diversity of contents, including pictures, voice, images, data, texts and combination thereof. As an open media access platform, the MMS can derive diversified content service applications through interaction between the mobile user and the Internet content provider. A user may be an MMS consumer and a content developer, which improves the interest of the terminal user in using the service. The 3GPP 23.140 specifications set forth the process as regards how a Value Added Service Provider (VASP) sends an MMS message to the terminal user through a Multimedia Message Service Center (MMSC). The VASP interacts with the MMSC through an MM7 interface of the MMSC. As shown in Figure 1, the detailed procedure is as follow:
(1) the VASP submits an MMS message to the MMSC through an MM7_submit.REQ message;
(2) the MMSC checks the message, and returns an MM7_submit.RES message to the VASP, indicating success or failure of receiving;
(3) if the MMSC receives the message from the VASP successfully, the MMSC determines that the MMS terminal is a recipient MMS UA which supports MMS, and then sends an MM1_notification.REQ to the recipient MMS UA terminal, prompting the terminal to receive an MMS message;
(4) after receiving the MM1_notification.REQ, the recipient MMS UA returns an MM1_notification.RES response, with the response code being "deferred";
(5) the Recipient MMS UA sends an MM1_retrieve.REQ request to the MMSC, requesting to retrieve the MMS message;
(6) the MMSC sends the MMS message "MM1_retrieve.RES" to the Recipient MMS UA;
(7) after receiving the MMS message, the recipient MMS UA returns an MM1_acknowledgement.REQ message to the MMSC, indicating success of retrieving the MMS message;
(8) according to the result of sending the MMS message, the MMSC sends an MM7_delivery_report.REQ message to the VASP; and
(9) after receiving the MM7_delivery_report.REQ message, the VASP returns an MM7_delivery_report.RES response to the MMSC.

In the 3GPP23140 specifications, the MM7 interface allows the VASP to write multiple terminal addresses ("recipient address" field) when submitting the MMS message, which involves two problems:
(1) currently, the MMSC generally sets an upper limit of the terminal addresses to which the MMS message can be submitted. If the destination addresses of the MMS message are more than the upper limit, the MMSC will reject the MMS message. In the current practice, when the VASP distributes messages to mobile terminals, a fixed number of terminals can be input at a time. The same MMS message content needs to be submitted to the MMSC at many attempts, which increases the bandwidth required between the VASP and the MMSC, and imposes a high requirement on the storage processing of the MMSC; and
(2) even if the MMSC supports buffering of the messages of multiple terminals, the messages sent in groups impose a high impact on the MMSC traffic.

### SUMMARY

In view of the foregoing problems, the present invention puts forward a system and a method for transmitting messages in groups to an unlimited number of terminals, thus overcoming the restriction on the quantity of terminals imposed by the MMSC and the impact on the MMSC traffic caused by the messages submitted by the VASP to multiple terminals in the case of group sending of messages from the VSAP.

A system for transmitting MMS messages in groups includes: a Multimedia Message Service Center (MMSC), and a Value Added Service Provision (VASP) system. The MMSC includes an MMS content identifier generating apparatus, and is connected with the VASP system. The MMSC is adapted to receive the MMS messages sent by the VASP system; set an identifier for the MMS content; and send the identifier to the VASP.

The VASP system is adapted to send a message carrying a collection of terminal numbers and an identifier to the MMSC.

The MMSC is adapted to obtain the MMS content according to the identifier, and send the MMS content to the terminals indicated in the collection of terminal numbers.

The VASP system is further adapted to send the first identifier to the MMSC.

The MMSC is further adapted to: obtain the MMS content according to the identifier; send the MMS content to the terminals indicated in the collection of terminal numbers; and determine whether the first identifier is valid. If the first identifier is valid, the MMSC continues waiting for the next request message carrying an identifier and a new terminal number collection from the VASP system; if the first identifier is not valid, the MMSC deletes the stored MMS content.

The VASP system is further adapted to send time control parameters to the MMSC.

The MMSC is further adapted to determine whether the VASP system submits a new request message carrying an identifier and a collection of terminal numbers to the MMSC within the time set by the time control parameter, after the MMS content identifier generating apparatus sends the identifier to the VASP system. If a new request message is submitted, the MMSC will send the MMS content to the terminals indicated in the collection of terminal numbers carried in the new request message; otherwise, the MMSC deletes the stored MMS content.

A VASP system includes a group-transmit negotiating apparatus; and the MMSC includes a group-transmit determining apparatus.

The group-transmit negotiating apparatus is adapted to send an MMS group-transmit capability negotiation request to the group-transmit determining apparatus.

The group-transmit determining apparatus is adapted to receive the MMS group-transmit capability negotiation request, and determine whether the MMSC includes an MMS content identifier generating apparatus; if so, the group-transmit determining apparatus will start the MMS content identifier generating apparatus, and send a message of starting the MMS content identifier generating apparatus to the VASP system.

The VASP system is adapted to send an MMS message to the MMSC after receiving the message of starting the MMS content identifier generating apparatus.

A method for transmitting MMS messages in groups is based on the MMSC and the VASP system, and includes the following steps:
A. the VASP submits a first request to the MMSC, with the MMS contents and a collection of terminal numbers carried in the request;
B. the MMSC stores the MMS contents and sets an identifier for the MMS contents, and returns a response carrying the identifier to the VASP;
C. the MMSC sends the MMS contents to the terminals in the collection of terminal numbers mentioned in step A;
D. the VASP submits a second request to the MMSC, with an identifier and a collection of terminal numbers carried in the request; and
E. the MMSC searches out the MMS contents according to the identifier in the second request, and sends the MMS content to the terminals in the collection of terminal numbers mentioned in step D.

Step A is executed after that:
the VASP sends an MMS group-transmit capability negotiation request to the MMSC;
the MMSC receives the MMS group-transmit capability negotiation request, and determines whether the MMSC supports group transmission of MMS messages; and
if the MMSC supports group transmission, the MMSC sends a support response to the VASP system.

The first request mentioned in step A further includes a first identifier; and step C is executed before that:
if the MMSC determines that the first identifier is valid, the procedure proceeds to step D; otherwise, the MMSC deletes the stored the MMS content, and the process of the method is completed.

The second request mentioned in step D further includes a first identifier; and step E is executed before that:
if the MMSC determines that the first identifier is valid, step D and step E will be repeated: otherwise, the MMSC deletes the stored MMS content, and the process of the method is completed.

The first request further includes a time control parameter; and step D further includes:
D1: after receiving the response message, the VASP starts counting. If the VASP system submits a second request carrying an identifier and a collection of terminal numbers to the MMSC within the time set by the time control parameter, step E will be performed; otherwise, the MMS contents stored in step B will be deleted, and then process of the method is completed.

Step A is executed before that:
after receiving the first request message, the MMSC checks the VASP; if the check succeeds, step B will be performed; otherwise, the process of the method is completed.

Step A further is executed before that:
if the MMSC returns a failure response to the VASP, the process of the method is completed, otherwise, step B will be performed.

Step E is executed before that:
if the MMSC returns a failure response to the VASP and the MMSC determines that the Boolean value of the first identifier is "true", the MMSC will wait for the VASP to submit the subsequent messages within the time set by the time control parameter, and step D and step E will be repeated; otherwise, the stored MMS contents will be deleted, and the process of the method is completed.

A method for transmitting MMS messages in groups is based on the MMSC and the VASP system, and includes the following steps:
A. the VASP submits a first request to the MMSC, with the MMS contents and a collection of terminal numbers carried in the request;
B. the MMSC stores and sends the MMS contents to the terminals in the collection of terminal numbers mentioned in step A;
C. the MMSC sets an identifier for the MMS contents and returns a response carrying the identifier to the VASP;
D. the VASP submits a second request to the MMSC, with an identifier and a collection of terminal numbers carried in the request; and
E. the MMSC searches out the MMS content according to the identifier in the second request, and sends the MMS content to the terminals in the collection of terminal numbers mentioned in step D.

The first request mentioned in step A further includes a first identifier; and step C is executed before that:
if the MMSC determines that the first identifier is valid, the procedure proceeds to step D; otherwise, the MMSC deletes the stored MMS content, and the process of the method is completed.

Step E is executed before that:
if the MMSC determines that the first identifier is valid, step D and step E will be repeated; otherwise, the MMSC deletes the stored MMS content, and the process of the method is completed.

A Value Added Service Provision (VASP) system includes:
a message sending apparatus, adapted to send MMS messages to the MMSC;
a first MMS content identifier obtaining apparatus, adapted to receive the identifier set by the MMSC for the MMS contents; and
a signaling sending apparatus, adapted to send a message carrying a collection of terminal numbers of the recipient and an identifier to the MMSC.

A system for transmitting MMS messages in groups includes an MMS distribution platform.

The MMS distribution platform includes:
a message processing apparatus, adapted to: receive the MMS message sent by the VASP system; and send the MMS message to the MMSC.

The MMSC includes:
an MMS content identifier generating apparatus, adapted to receive the MMS message, set an identifier for the MMS contents, and send the identifier to the distribution platform.

The distribution platform further includes:
a number obtaining apparatus, adapted to obtain the recipient terminal number collection of the MMS message;
an MMS content identifier obtaining apparatus, adapted to receive the identifier set by the MMSC for the MMS contents;
a signaling sending apparatus, adapted to send a message carrying a collection of terminal numbers and an identifier to the MMSC.

The MMSC further includes:
a signaling processing apparatus, adapted to obtain MMS content according to the identifier, and send the MMS content to the terminals indicated by the numbers in the collection of terminal numbers.

An MMS distribution platform includes:
a message processing apparatus, adapted to: receive the MMS message sent by the VASP system; and send the MMS message to the MMSC;
an MMS content identifier obtaining apparatus, adapted to receive the identifier set by the MMSC for the MMS contents;
a number obtaining apparatus, adapted to obtain the recipient terminal number collection of the MMS message; and
a signaling sending apparatus, adapted to send a message carrying a collection of terminal numbers and an identifier to the MMSC.

An MMSC includes:
an MMS content identifier generating apparatus, adapted to receive the MMS message, set an identifier for the MMS contents, and send the identifier to the sender of the MMS message;
a signaling receiving apparatus, adapted to receive the message carrying a collection of terminal numbers and an identifier from the sender of the MMS message; and
a signaling processing apparatus, adapted to obtain MMS content according to the identifier, and send the MMS content to the terminals indicated by the numbers in the collection of terminal numbers.

The present invention overcomes the restriction on the quantity of recipients imposed by the MMSC and the impact on the MMSC traffic caused by the messages submitted by the VASP to multiple recipients. When the same MMS content is sent to multiple recipient terminals, the VASP sends the MMS content to multiple recipient terminals in batches, and submits the same MMS content to the MMSC at a single attempt, thus reducing the bandwidth required between the VASP and the MMSC and lowering the requirement on the storage of the MMSC.

### BRIEF DESCRIPTION OF THE DRAWINGS

Figure 1 is a flowchart of the prior art.

Figure 2 shows the structure of a system for transmitting MMS messages in groups according to the first embodiment of the present invention.

Figure 3 shows the structure of a system for transmitting MMS messages in groups according to the second embodiment of the present invention.

Figure 4 is a flowchart of the method for transmitting MMS messages in groups according to the first embodiment of the present invention.

Figure 5 is a flowchart of the method for transmitting MMS messages in groups according to the second embodiment of the present invention.

Figure 6 shows the structure of a VASP system according to the third embodiment of the present invention.

Figure 7 shows the structure of a system for transmitting MMS messages in groups according to the fourth embodiment of the present invention.

### DETAILED DESCRIPTION

Figure 2 shows the structure of a system for transmitting MMS messages in groups according to the first embodiment of the present invention. The system includes: VASP system 103, MMSC 101, and an MMS-enabled terminal 104, which are connected consecutively. The VASP system 103 sends an MMS message to the MMS-enabled terminal 104 through the MMSC 101. The MMSC 101 further includes: an MMS content identifier generating apparatus 102, connected with the VASP system 103 and adapted to: receive MMS messages from the VASP system 103, set an identifier for the MMS content, and send the identifier to the VASP system 103. In this embodiment, the VASP system 103 wants to send MMS messages to 500 MMS-enabled terminals. Due to restriction of the MMSC 101, the VASP system 103 can send MMS messages to a maximum of 100 MMS-enabled terminals at a time. Therefore, the VASP system 103 divides 500 terminal numbers into several collections, and the quantity of terminal numbers in each collection is less than or equal to the upper limit "100" set by the MMSC 101.

Optionally, the MMSC 101 does not restrict the quantity of terminals to which the VASP system 103 can send MMS messages at a time. Nevertheless, the VASP system 103 sends the MMS messages to the recipient terminals in batches in order to relieve the load of the MMSC 101. In this embodiment, the VASP system 103 divides 500 terminal numbers into several collections, and the quantity of terminal numbers in each collection is less than or equal to 100.

After the VASP system 103 sends the first message carrying the MMS content and the collection of 100 terminal numbers in the first batch to the MMSC 101; the MMSC 101 stores the MMS content, and sends the content to the terminals indicated in the collection of terminal numbers. The MMS content identifier generating apparatus 102 located on the MMSC 101 affixes a unique identifier to the MMS content in the message, and sends the identifier to the VASP system 103. After receiving the message, the VASP system 103 sends a second carrying an identifier and a collection of 100 terminal numbers in the second batch to the MMSC 101. It should be noted that the second message carries no the MMS content, but carries the identifier of the MMS content, thus reducing the network bandwidth required between the VASP system 103 and the MMSC 101. The MMSC 101 finds the corresponding MMS content according to the identifier, and sends the MMS content to the terminals indicated by the numbers in the collection of terminal numbers of the second batch.

The VASP system handles the remaining terminals number in the mode of the second message described above until the same MMS message is sent to all terminal numbers as required.

Preferably, in this embodiment, when the VASP 103 sends each message carrying a collection of terminal numbers to the MMSC 101, the message carries an identifier. The MMSC 101 sends the MMS content to the terminals indicated by the numbers in the collection of terminal numbers according to the identifier, and determines whether the Boolean value of the first identifier is "true". If the Boolean value is "true", the MMSC continues waiting for the next request message carrying an identifier and a new terminal number collection from the VASP system; otherwise, the MMSC deletes the stored MMS content and shut down the VASP system.

Preferably, in this embodiment, when the VASP 103 sends each message carrying a collection of terminal numbers to the MMSC 101, the message carries a time control parameter. After the MMS content identifier generating apparatus 102 sends the MMS content identifier to the VASP 103, the MMSC 101 determines whether the VASP system 103 submits a new request message carrying an identifier and a collection of terminal numbers to the MMSC 101 within the time set by the time control parameter. If so, the MMSC 101 sends the MMS content to the terminals indicated by the numbers in the collection of terminal numbers in the new request message; otherwise, the MMSC shuts down the VASP system.

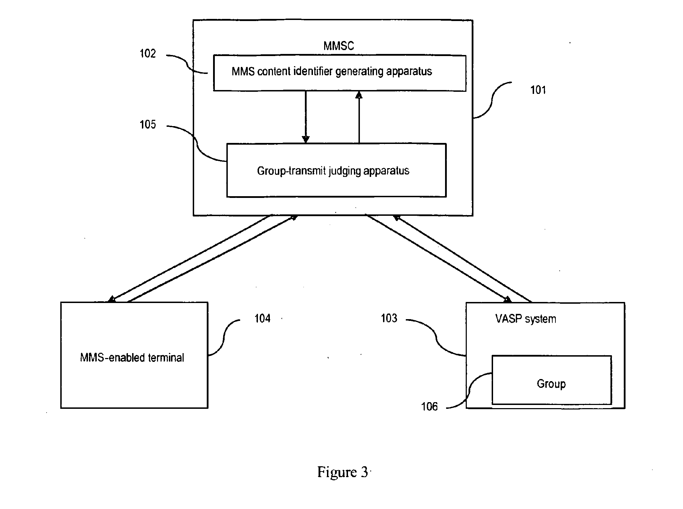

Optionally, as shown in Figure 3 (corresponding to Figure 1), in the second embodiment of the system for transmitting MMS messages in groups, the VASP system 103 includes a group-transmit negotiating apparatus 106; and the MMSC 101 includes a group-transmit determining apparatus 105.

The group-transmit negotiating apparatus 106 is adapted to send an MMS group-transmit capability negotiation request (MM7_capability_negotiation.REQ) to the group-transmit determining apparatus 105.

The group-transmit determining apparatus 105 is adapted to receive the MMS group-transmit capability negotiation request, and determine whether the MMSC 101 includes an MMS content identifier generating apparatus 102; if so, the group-transmit determining apparatus 105 starts the MMS content identifier generating apparatus 102, and send a message of starting the MMS content identifier generating apparatus 102 (MM7_capability_negotiation.RES) to the VASP system 103, indicating that the MMSC 101 supports group transmission of the MM7 interface messages.

The VASP system 103 is adapted to send an MMS message to the MMSC 101 after receiving the message of starting the MMS content identifier generating apparatus 102.

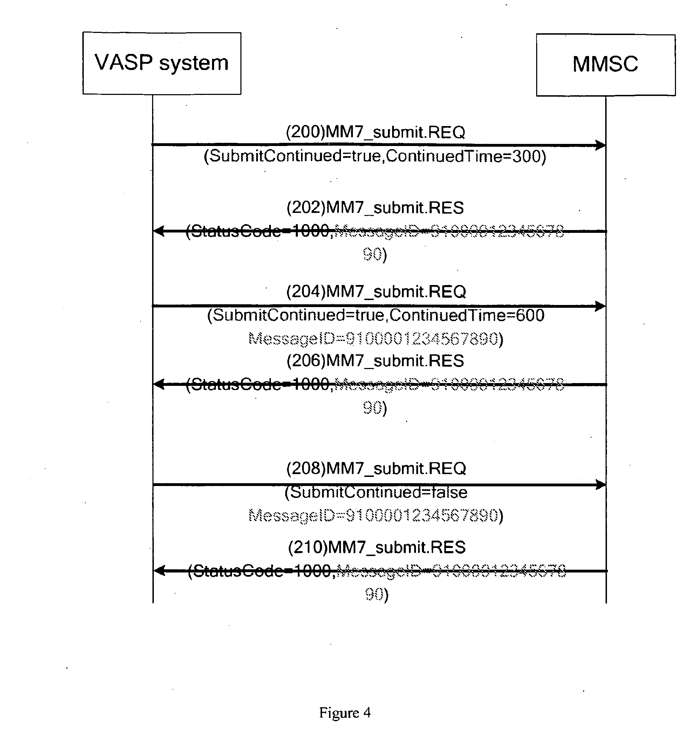

As shown in Figure 4, the process for transmitting MMS messages in groups according to the first embodiment of the present invention includes the following steps:

Step 200: The VASP edits the MMS content, and sends the first submission message "MM7_submit.REQ" carrying the MMS content to the MMSC. The VASP inputs one or more terminal numbers in the "recipient terminal number" field of the message (according to the upper limit of the quantity of recipient terminals imposed by the MMSC, or as decided by the VASP in view of the load capacity of the MMSC) to form terminal number collection. The first submission message also carries these parameters: a first identifier "SubmitContinued", which is set to "true" in this embodiment; and a time control parameter "ContinuedTime", which is set to "300 s" in this embodiment.

Step 202: After receiving the message submitted by the VASP, the MMSC checks the VASP. If the VASP information is illegal, the check fails, and the process of this method is completed. If the check succeeds but the number authentication for the collection of terminal numbers fails, or the MMSC is too busy to handle the message, the MMSC returns a failure response to the VASP, and the process of this method is completed; otherwise, the process of this method goes on. After storing and sending the MMS content to the terminals in the collection of terminal numbers mentioned in step 200, the MMSC sets an identifier "MessageID" for the MMS content. In this embodiment, the MessageID is set to "9100001234567890". The MMSC returns a success submission response "MM7_submit.RES" which carries the MessageID to the VASP. The MMSC checks whether the Boolean value of the first identifier "SubmitContinued" is "true". If the Boolean value is "true", step 204 is performed; otherwise, the MMSC deletes the stored MMS content, and the process of the method is completed.

Likewise, step 202 may be adjusted to that after receiving the message submitted by the VASP, the MMSC checks the VASP. If the VASP information is illegal, the check fails, and the process of this method is completed. If the check succeeds but the number authentication for the collection of terminal numbers fails, or the MMSC is too busy to handle the message, the MMSC returns a failure response to the VASP, and the process of this method is completed; otherwise, the process of this method goes on. The MMSC stores the MMS content and sets an identifier "MessageID" for the MMS content. In this embodiment, the MessageID is set to "9100001234567890". The MMSC returns a success submission response "MM7_submit.RES" which carries the MessageID to the VASP. The MMSC sends the MMS content to the terminals in the collection of terminal numbers mentioned in step 200, and checks whether the Boolean value of the first identifier "SubmitContinued" is "true". If the Boolean value is "true", step 204 is performed; otherwise, the MMSC deletes the stored MMS content, and the process of the method is completed.

The MM7_submit.RES message carries a "StatusCode" parameter, which is set to "1000" in this embodiment, indicating that the message is a success response message; meanwhile, the MMSC sets the time limit of waiting for submission of the next MMS message to "300 s" according to the "ContinuedTime" submitted in step 200. After the VASP receives the response message, the MMSC starts counting. If the VASP submits a second MM7_submit.REQ message carrying a MessageID and a collection of terminal numbers to the MMSC within the time set by the time control parameter, step 204 will be performed; otherwise, the MMSC will delete the stored MMS content and the process is completed.

Step 204: The VASP submits a second MM7_submit.REQ message within the time limit "300 s". The parameters in the message are: SubmitContinued = true; ContinuedTime = 600; the MessageID field is set to the value "9100001234567890" returned by the first MM7_submit.RES message. The value of the MessageID is stored by the VASP, and will be available for submitting subsequent requests when a failure MM7_submit.RES is received subsequently. The "recipient terminal number" field is updated to the new terminal number that will be served by the VASP. The message carries no MMS content.

Step 206: After receiving the second MM7_submit.REQ message submitted by the VASP, the MMSC checks the VASP. If the VASP information is illegal, the check fails, and the process is completed; if the check succeeds, the MMSC searches for the MMS content according to the MessageID value "9100001234567890" of the second MM7_submit.REQ message, and sends the MMS content to the terminals in the collection of terminal numbers mentioned in step 204. The MMSC returns a success submission response message "MM7_submit.RES" carrying the MessageID "9100001234567890" to the VASP, and checks whether the Boolean value of the first identifier "SubmitContinued" is "true". If the Boolean value is "true", step 208 and step 210 will be performed: otherwise, the MMSC deletes the stored MMS content, and the process is completed.

Likewise, step 206 may be adjusted to: after receiving the second MM7_aubmit.REQ message submitted by the VASP, the MMSC checks the VASP. If the VASP information is illegal, the check fails, and the process is completed; if the check succeeds, the MMSC returns a success submission response message "MM7_submit.RES" carrying the MessageID to the VASP. The MMSC searches for the MMS content according to the MessageID value "9100001234567890" of the second MM7_submit.REQ message, and sends the MMS content to the terminals in the collection of terminal numbers mentioned in step 204. The MMSC checks whether the Boolean value of the first identifier "SubmitContinued" is "true". If the Boolean value is "true", step 208 and step 210 will be performed; otherwise, the MMSC deletes the stored MMS content, and the process is completed.

According to the ContinuedTime submitted in step 204, the MMSC sets the time limit of waiting for submission of the next MMS message to "600 s".

Particularly, if the authentication of the number in the collection of terminal numbers fails after the MMSC receives the second MM7_submit.REQ message submitted by the VASP, or if the MMSC is too busy to handle the message, the MMSC will return a failure response to the VASP. The MMSC determines whether the Boolean value of the first identifier "SubmitContinued" is "true". If the Boolean value is "true", the MMSC will wait for the VASP to submit the subsequent message in a time limit of 600 seconds (which is a value of "ContinuedTime"), and prolong the waiting time accordingly. After receiving the failure response, the VASP does not stop sending request messages, but continues to perform step 208 and step 210.

Step 208 and step 210: Subsequently, the MMSC and the VASP repeat step 204 and step 206 until the VASP sends a message which carries a SubmitContinued parameter with a Boolean value of "false" to the MMSC. Now the MMSC stops sending the same MMS content.

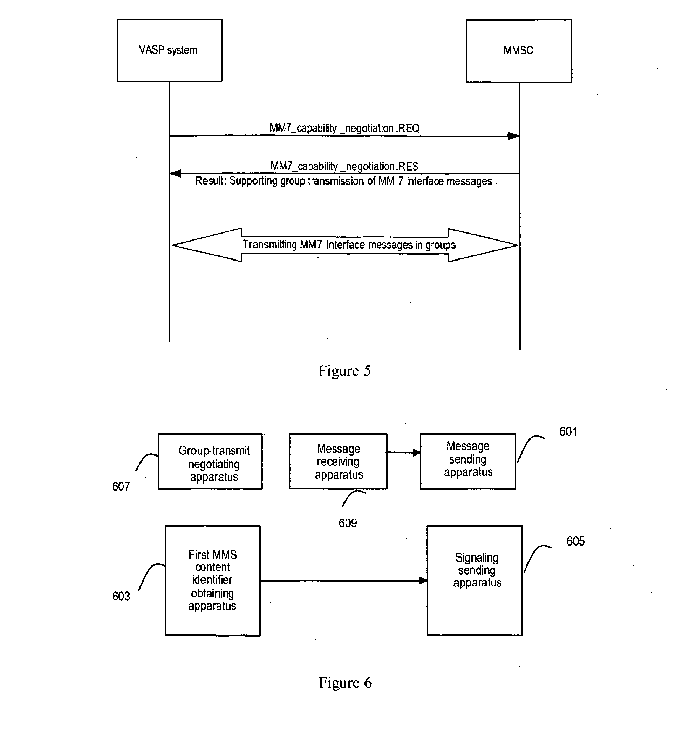

Optionally, as shown in Figure 5 (corresponding to Figure 4), the process for transmitting MMS messages in groups according to the second embodiment of the present invention includes the steps described hereinafter before step 200 shown in Figure 4.

The VASP sends an MMS group-transmit capability negotiation request (MM7_capability_negotiation.REQ) to the MMSC. Details of the request are shown in Table 1.

**Table 1**

| **Information element** | **Mandatory /optional** | **Description** |
|---|---|---|
| Transaction ID | Mandatory | ID corresponding to MM7_ |
| | | Capability_negotiation.REQ / MM7_ |
| | | Capability_negotiation.RES |
| Message type | Mandatory | Identifying this message as |
| | | MM7_Capability_negotiation request |
| MM7 version | Mandatory | Identifying the version of the interfaces supported by the VASP |
| VASP ID | Optional | Identifying the VASP of this MMS relay/server |
| VAS ID | Optional | Identifying the originating application |
| Bulk Supporting | Optional | Inquiring whether the MMSC supports group transmission of MM7 interface messages |

The MMSC receives the MMS group-transmit capability negotiation request, and determines whether the MMSC supports group transmission of MMS messages.

If the MMSC supports group transmission, the MMSC sends a support response (MM7_capability_negotiation.RES) to the VASP system. The details of the response are shown in Table 2.

**Table 2**

| **Information element** | **Mandatory /optional** | **Description** |
|---|---|---|
| Transaction ID | Mandatory | ID corresponding to MM7_ |
| | | Capability_negotiation.REQ / MM7_ |
| | | Capability_negotiation.RES |
| Message type | Mandatory | Identifying this message as MM7_Capability_negotiation response |
| MM7 version | Mandatory | Identifying the version of the interfaces supported by the MMS relay/server |
| Bulk Supporting | Optional | Identifying whether the MMSC supports group transmission of MM7 interface messages |

If the MMSC does not support group transmission, the following scenario of centralized processing may apply:
(1) the MMSC returns a capability negotiation response "MM7_capability_negotiation.RES", indicating no support of group transmission;
(2) the MMSC returns an error response "MM7_RS_error.RES";
(3) timeout without response; and
(4) other error response.

In any of the foregoing four circumstances, the VASP sends an MMS message according to the 3GPP specifications.

As shown in Figure 6, the structure of a VASP system according to the third embodiment of the present invention includes:
a message sending apparatus 601, adapted to send MMS messages to the MMSC;
a first MMS content identifier obtaining apparatus 603, adapted to receive the identifier set by the MMSC for the MMS contents; and
a signaling sending apparatus 605, adapted to send a message carrying a collection of terminal numbers of the recipient and an identifier to the MMSC.

Optionally, the VASP system in this embodiment further includes:
a group-transmit negotiating apparatus 607, serving the same functions as described in Figure 3, and adapted to send an MMS group-transmit capability negotiation request to the MMSC;
a message receiving apparatus 609, adapted to receive a response message about support of group transmission of interface messages sent by the MMSC; and
a message sending apparatus 601, adapted to send MMS messages to the MMSC according to the response message.

Optionally, the VASP can obtain the recipient terminal number collection of the MMS message from the data service management platform synchronously.

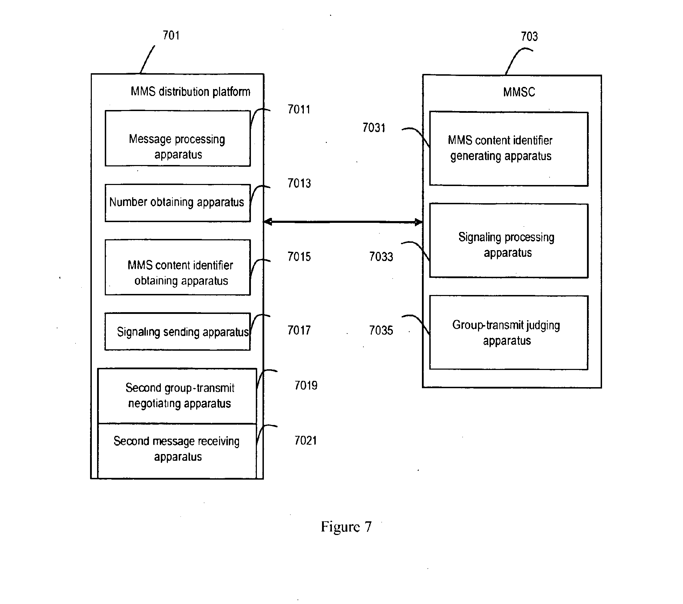

Figure 7 shows the structure of a system for transmitting MMS messages in groups according to the fourth embodiment of the present invention.

The system includes an MMSC 703, and an MMS distribution platform 701.

The distribution platform 701 includes:
a message processing apparatus 7011, adapted to: receive the MMS message sent by the VASP system; and send the MMS message to the MMSC.

Optionally, the distribution platform 701 further includes:
a second group-transmit negotiating apparatus 7019, adapted to send an MMS group-transmit capability negotiation request to the MMSC; and
a second message receiving apparatus 7021, adapted to receive a response message about support of group transmission of interface messages sent by the MMSC 703. In this embodiment, the response message about support of group transmission of interface messages may be the message of starting the MMS content identifier generating apparatus.

The message processing apparatus 7011 is adapted to:
receive the MMS message sent by the VASP system; and
send the MMS message to the MMSC 703 according to the response message.

The MMSC 703 includes:
an MMS content identifier generating apparatus 7031, adapted to receive the MMS message, set an identifier for the MMS contents, and send the identifier to the distribution platform 701.

The distribution platform 701 further includes:
a number obtaining apparatus 7013, adapted to obtain the recipient terminal number collection of the MMS message;
an MMS content identifier obtaining apparatus 7015, adapted to receive the identifier set by the MMSC 703 for the MMS contents; and
a signaling sending apparatus 7017, adapted to send a message carrying a collection of terminal numbers and an identifier to the MMSC 703.

The MMSC 703 further includes:
a signaling processing apparatus 7033, adapted to obtain MMS content according to the identifier, and send the MMS content to the terminals indicated by the numbers in the collection of terminal numbers; and
a group-transmit determining apparatus 7035, serving the same functions as described in Figure 3, adapted to receive the MMS group-transmit capability negotiation request, and determine whether the MMSC includes an MMS content identifier generating apparatus; if so, the group-transmit determining apparatus will start the MMS content identifier generating apparatus 7031, and send a message of starting the MMS content identifier generating apparatus to the sender of the MMS group-transmit capability negotiation request. Optionally, in different embodiments, the MMS group-transmit capability negotiation request may be sent by the VASP system or the distribution platform.

The message processing apparatus 7011 is adapted to:
receive the MMS message sent by the VASP system; and
send the MMS message to the MMSC according to the message of starting the MMS content identifier generating apparatus.

The process of this embodiment is elaborated below.

The message processing apparatus 7011 of the distribution platform 701 receives the MMS message sent by the VASP system; the number obtaining apparatus 7013 obtains the first recipient terminal number collection of the MMS message, and submits a request message to the MMS content identifier generating apparatus 7031 of the MMSC 703 according to the capability negotiation result, with the MMS content and the recipient terminal number collection of the MMS message carried in the message. In this case, the MMSC703 can send the received MMS content to the recipient terminals indicated in the collection of terminal numbers. The MMS content identifier generating apparatus 7031 stores the MMS content, sets an identifier for the MMS content, and sends the identifier to the MMS content identifier obtaining apparatus 7015 of the distribution platform 701. The number obtaining apparatus 7013 obtains the second recipient terminal number collection of the MMS message; the signaling sending apparatus 7017 sends a message carrying the second recipient terminal number collection and the MMS content identifier to the MMSC703; the signaling processing apparatus 7033 returns a response message to the signaling sending apparatus 7017, and send an MMS notification message to the terminals indicated by the numbers in the collection of terminal numbers in groups. Multiple terminals simultaneously request the signaling processing apparatus 7033 to obtain the MMS content. After receiving the simultaneous requests, the signaling processing apparatus 7033 obtains the stored MMS content, and then sends the MMS content to the recipient terminal. After receiving the MMS content, the terminal sends an MMS response message to the signaling processing apparatus 7033. After obtaining the results sent by some or all terminals, the signaling processing apparatus 7033 sends a delivery report request to the signaling sending apparatus 7017, and handles the response message. The signaling processing apparatus 7033 requests the charging apparatus to perform charging; and the signaling processing apparatus 7033 deletes the MMS content, and the process is completed.

In the foregoing process, the MMS content is stored in the memory, and is encoded into the MM1 message format. In this way, the messages are stored quickly, the internal message coding consumption is reduced and the node processing capability is provided. In the signaling processing apparatus 7033, the session can be organized according to the model of the recipient terminal. In this way, if content adaptation is required, one session needs only one attempt of message adaptation, which reduces the requirement on message adaptation imposed by the MMSC703. In the signaling processing apparatus 7033, the notification messages are sent through group transmission, and can be sent directly through connection with the signaling network, thus speeding up the sending of the PUSH notification. In the signaling processing apparatus 7033, one delivery report message identifies the message delivery results of multiple recipients simultaneously, thus improving the system processing efficiency.

Optionally, a number obtaining apparatus, adapted to obtain the recipient terminal number collection of the MMS message from the MMS message sent by the VASP system, or from the data service management platform synchronously.

In the sent MMS message, the VASP treats all recipient numbers as a text medium of the MMS message; in the request message, the VASP inputs the content identifier of the medium element, for example, inputs the Content-ID information of the medium element in the "Recipient address" field of the MM7_submit.REQ message. After receiving the message, the distribution platform obtains the recipient list file according to the information in the "Recipient address" field, and removes the recipient list text medium from the MMS content. In the recipient list file, recipient addresses are delimited by commas, for example, "13900001234, 13800001234".

Alternatively, the VASP may input no recipient information in the message to be submitted. Instead, the recipient information is synchronized periodically by the distribution platform from the data service management platform. The data is synchronized through files, and each line in a file is one record, with the fields being delimited by colons. The details of the fields are:

**Table 3**

| *Field* | Meaning | Remarks |
|---|---|---|
| VASPID | VASP | |
| | enterprise code | |
| VASID | VASP service code | |
| ServiceCode | VASP service code | |
| RecipientList | Recipient list | Recipient addresses are delimited by commas. |

an example of a record is: "999999:8888:123: 13900001234, 13800001234...".

In the foregoing embodiment, the MMSC sets an identifier for the MMS content, and receives an MMS message which carries the identifier and is sent by the VASP system or the distribution platform, thus implementing group transmission of an MMS message. Among the MMS messages sent by the VASP or the distribution platform to the MMSC, except the first message which carries the MMS content, all other MMS messages carry the identifier corresponding to the MMS message instead of the MMS content. Since the size of an identifier is much smaller than the size of an MMS content, the bandwidth resources occupied between the MMSC and the VASP are reduced drastically, the processing load of the MMSC is relieved greatly, and the storage requirement on the MMSC is lowered. Moreover, in the solution to sending MMS messages in groups through a distribution platform, the VASP needs only to send the MMS group-transmit service to the distribution platform at a single attempt, which ensures the quality of the MMS group-transmit service, especially when the MMSC is busy.

## Claims

1. A system for transmitting Multimedia Message Service (MMS) messages in groups, comprising a Multimedia Message Service Center, (MMSC), and a Value Added Service Provider (VASP) system, **characterized in that** the system for transmitting MMS message in groups further comprising:
the MMSC further comprises an MMS content identifier generating apparatus, connected with the VASP system and adapted to:
receive a MMS message from the VASP system, set an identifier for the MMS content, and send the identifier to the VASP system;
the MMSC is further adapted to store the MMS content received from the VASP system;
the VASP system is adapted to send a message carrying a collection of terminal numbers and the identifier to the MMSC; and
the MMSC is further adapted to obtain the MMS content according to the identifier, and send the MMS content to the terminals indicated in the collection of terminal numbers.

2. The system for transmitting MMS messages in groups according to claim 1, wherein:
the VASP system is further adapted to send the first identifier to the MMSC; and
the MMSC is further adapted to determine whether the first identifier is valid;
if the first identifier is valid, the MMSC continues waiting for a next request message carrying an identifier and a new terminal number collection from the VASP system;
if the first identifier is not valid, the MMSC deletes the MMS content.

3. The system for transmitting MMS messages in groups according to claim 1, wherein:
the VASP system is further adapted to send time control parameters to the MMSC; and
the MMSC is further adapted to:
after the MMS content identifier generating apparatus sends the identifier to the VASP system, determine whether the VASP system submits a new request message carrying an identifier and a collection of terminal numbers to the MMSC within the time set by the time control parameter: if the new request message is submitted, the MMSC will send the MMS content to the terminals indicated in the collection of terminal numbers carried in the new request message; otherwise, the MMSC deletes the MMS content.

4. The system for transmitting MMS messages in groups according to claim 1, wherein: the VASP system comprises a group-transmit negotiating apparatus; and the MMSC comprises a group-transmit determining apparatus:
the group-transmit negotiating apparatus is adapted to send an MMS group-transmit capability negotiation request to the group-transmit determining apparatus;
the group-transmit determining apparatus is adapted to receive the MMS group-transmit capability negotiation request, and determine whether the MMSC comprises an MMS content identifier generating apparatus; if the MMSC comprises the MMS content identifier , the group-transmit determining apparatus starts the MMS content identifier generating apparatus, and send a message of starting the MMS content identifier generating apparatus to the VASP system; and
the VASP system is adapted to send an MMS message to the MMSC after receiving the message of starting the MMS content identifier generating apparatus.

5. A method for transmitting MMS messages in groups, **characterized in that** the method comprising:
receiving, from a Value Added Service Provider, VASP, a first request with the MMS content and a collection of terminal numbers carried in the request;
storing the MMS content and setting an identifier for the MMS content, and returning a response carrying the identifier to the VASP;
sending the MMS content to the terminals in the collection of terminal numbers in the first request;
receiving a second request with an identifier and a collection of terminal numbers carried in the request; and
searching out the MMS content according to the identifier in the second request, and sending the MMS content to the terminals in the collection of terminal numbers in the second request.

6. The method for transmitting MMS messages in groups according to claim 5, wherein the receiving a first request with the MMS contents and a collection of terminal numbers carried in the request is executed after:
receiving an MMS group-transmit capability negotiation request, and determining whether the MMSC supports group transmission of MMS messages; and
if the MMSC supports group transmission, sending a support response to the VASP system.

7. The method for transmitting MMS messages in groups according to claim 5, wherein: the first request further comprises a first identifier; and the method further comprises:
if the first identifier is valid, executing to receive second request with an identifier and a collection of terminal numbers carried in the request; otherwise, deleting the MMS content.

8. The method for transmitting MMS messages in groups according to claim 5, wherein the second request further comprises a first identifier; and the method further comprises:
if the first identifier is valid, repeating receiving a next request with an identifier and a collection of terminal numbers carried in the request; and
searching out the MMS content according to the identifier in the next request, and sending the MMS content to the terminals in the collection of terminal numbers; otherwise, deleting the MMS content.

9. The method for transmitting MMS messages in groups according to claim 5, wherein the first request further comprises a time control parameter; and the method further comprises:
if the second request carrying an identifier and a collection of terminal numbers within the time set by the time control parameter,
the process of searching out the MMS content according to the identifier in the second request, and sending the MMS content to the terminals in the collection of terminal numbers is executed; otherwise, deleting the stored MMS content.

10. The method for transmitting MMS messages in groups according to claim 8 or claim 9, wherein of the method further comprises:
if the MMSC returns a failure response to the VASP and the MMSC determines that the Boolean value of the first identifier is "true", waiting for, by the MMSC, the VASP to submit the subsequent messages within the time set by the time control parameter, and repeating receiving a second request with an identifier and a collection of terminal numbers carried in the request; otherwise, deleting the stored MMS content .

11. A VASP system, comprising:
a message sending apparatus (601), adapted to send a MMS message to the MMSC; **characterized in that** the VASP system comprising:
a first MMS content identifier obtaining apparatus (603), adapted to receive an identifier set by the MMSC for the MMS content; and
a signaling sending apparatus (605), adapted to send a message carrying a collection of terminal numbers of the recipients and the identifier to the MMSC.

12. The VASP system of claim 11, further comprising:
a group-transmit negotiating apparatus (607), adapted to send an MMS group-transmit capability negotiation request to the MMSC;
a message receiving apparatus (609), adapted to receive a response message about support of group transmission of interface messages sent by the MMSC; and
the message sending apparatus (601), adapted to send MMS messages to the MMSC according to the response message.

13. An MMS distribution platform (701), comprising:
a message processing apparatus (7011), adapted to receive an MMS message sent by a VASP system and send the MMS message to an MMSC;
a first MMS content identifier obtaining apparatus (7015), adapted to receive an identifier set by the MMSC for the MMS content;
a number obtaining apparatus (7013), adapted to obtain a recipient terminal number collection of the MMS message; and
a signaling sending apparatus (7017), adapted to send a message carrying the collection of recipient terminal numbers and the content identifier to the MMSC.

14. The MMS distribution platform of claim 13, comprising:
a group-transmit negotiating apparatus (7019), adapted to send an MMS group-transmit capability negotiation request to the MMSC; and
a message receiving apparatus (7021), adapted to receive a response message about support of group transmission of interface messages sent by the MMSC;
the message processing apparatus (7011), adapted to receive the MMS message sent by the VASP system; and send the MMS message to the MMSC according to the response message.

15. An MMSC (703), **characterized in that**, the MMSC comprising:
an MMS content identifier generating apparatus (7031), adapted to receive the MMS message, store an MMS content received from a VASP system, set an identifier for the MMS contents, and send the identifier to the sender of the MMS message;
a signaling receiving apparatus, adapted to receive the message carrying a collection of terminal numbers and an identifier from the sender of the MMS message; and
a signaling processing apparatus (7033), adapted to obtain MMS content according to the identifier, and send the MMS content to the terminals indicated by the numbers in the collection of terminal numbers.

## Patentansprüche

1. System zum Übertragen von MMS-Nachrichten (Multimedia Message Service) in Gruppen, umfassend ein MMSC (Multimedia Message Service Center) und ein VASP-System (Value Added Service Provider), **dadurch gekennzeichnet, dass** das System zum Übertragen einer MMS-Nachricht in Gruppen weiterhin Folgendes umfasst:
das MMSC umfasst weiterhin eine mit dem VASP-System verbundene Vorrichtung zum Generieren eines MMS-Inhaltsidentifizierers, ausgelegt zum:
Empfangen einer MMS-Nachricht von dem VASP-System, Setzen eines Identifizierers für den MMS-Inhalt und Senden des Identifizierers an das VASP-System;
wobei das MMSC weiterhin dafür ausgelegt ist, den von dem VASP-System empfangenen MMS-Inhalt zu speichern;
wobei das VASP-System dafür ausgelegt ist, eine eine Sammlung von Terminalnummern und den Identifizierer führende Nachricht an das MMSC zu senden; und
wobei das MMSC weiterhin dafür ausgelegt ist, den MMS-Inhalt gemäß dem Identifizierer zu erhalten und den MMS-Inhalt an die in der Sammlung von Terminalnummern angegebenen Terminals zu senden.

2. System zum Übertragen von MMS-Nachrichten in Gruppen nach Anspruch 1, wobei:
das VASP-System weiterhin dafür ausgelegt ist, den ersten Identifizierer an das MMSC zu senden; und
das MMSC weiterhin dafür ausgelegt ist zu bestimmen, ob der erste Identifzierer gültig ist;
falls der erste Identifizierer gültig ist, wartet das MMSC weiterhin auf eine nächste einen Identifizierer und eine neue Terminalnummersammlung führende Anforderungsnachricht von dem VASP-System;
falls der erste Identifizierer nicht gültig ist, löscht das MMSC den MMS-Inhalt.

3. System zum Übertragen von MMS-Nachrichten in Gruppen nach Anspruch 1, wobei:
das VASP-System weiterhin dafür ausgelegt ist, Zeitsteuerparameter an das MMSC zu senden; und
das MMSC weiterhin ausgelegt ist zum:
Bestimmen, nachdem die Vorrichtung zum Generieren eines MMS-Inhaltsidentifizierers den Identifizierer an das VASP-System sendet, ob das VASP-System eine neue, einen Identifizierer und eine Sammlung von Terminalnummern führende Anforderungsnachricht dem MMSC innerhalb der von dem Zeitsteuerparameter gesetzten Zeit unterbreitet: falls die neue Anforderungsnachricht unterbreitet wird, sendet das MMSC den MMS-Inhalt an die in der in der neuen Anforderungsnachricht geführten Sammlung von Terminalnummern angegebenen Terminals; ansonsten löscht das MMSC den MMS-Inhalt.

4. System zum Übertragen von MMS-Nachrichten in Gruppen nach Anspruch 1, wobei:
das VASP-System eine Gruppenübertragungsverhandlungsvorrichtung umfasst; und
das MMSC eine Gruppenübertragungsbestimmungsvorrichtung umfasst:
die Gruppenübertragungsverhandlungsvorrichtung ist dafür ausgelegt, eine MMS-Gruppenübertragungsfähigkeitsverhandlungsanforderung an die Gruppenübertragungsbestimmungsvorrichtung zu senden;
die Gruppenübertragungsbestimmungsvorrichtung dafür ausgelegt ist, die MMS-Gruppenübertragungsfähigkeitsverhandlungsanforderung zu empfangen und zu bestimmen, ob das MMSC eine Vorrichtung zum Generieren eines MMS-Inhaltsidentifizierers umfasst; falls das MMSC den MMS-Inhaltsidentifizierer umfasst, startet die Gruppenübertragungsbestimmungsvorrichtung die Vorrichtung zum Generieren eines MMS-Inhaltsidentifizierers und sendet eine Nachricht über das Starten der Vorrichtung zum Generieren eines MMS-Inhaltsidentifizierers an das VASP-System; und
das VASP-System dafür ausgelegt ist, nach dem Empfangen der Nachricht über das Starten der Vorrichtung zum Generieren eines MMS-Inhaltsidentifizierers eine MMS-Nachricht an das MMSC zu senden.

5. Verfahren zum Übertragen von MMS-Nachrichten in Gruppen, **dadurch gekennzeichnet, dass** das Verfahren Folgendes umfasst: Empfangen einer ersten Anforderung mit dem MMS-Inhalt und einer in der Anforderung geführten Sammlung von Terminalnummern von einem VASP (Value Added Service Provider);
Speichern des MMS-Inhalts und Setzen eines Identifizierers für den MMS-Inhalt und Zurückschicken einer den Identifizierer führenden Antwort an den VASP;
Senden des MMS-Inhalts an die Terminals in der Sammlung von Terminalnummern in der ersten Anforderung;
Empfangen einer zweiten Anforderung mit einem Identifizierer und einer Sammlung von Terminalnummern, in der Anforderung geführt; und
Suchen nach dem MMS-Inhalt gemäß dem Identifizierer in der zweiten Anforderung und Senden des MMS-Inhalts an die Terminals in der Sammlung von Terminalnummern in der zweiten Anforderung.

6. Verfahren zum Übertragen von MMS-Nachrichten in Gruppen nach Anspruch 5, wobei das Empfangen einer ersten Anforderung mit den MMS-Inhalten und einer Sammlung von Terminalnummern, die in der Anforderung geführt werden, ausgeführt wird nach dem:
Empfangen einer MMS-Gruppenübertragungsfähigkeitsverhandlungsanforderung und Bestimmen, ob das MMSC eine Gruppenübertragung von MMS-Nachrichten unterstützt; und
falls das MMSC eine Crruppenübertragung unterstützt, Senden einer Unterstützungsantwort an das VASP-System.

7. Verfahren zum Übertragen von MMS-Nachrichten in Gruppen nach Anspruch 5, wobei: die erste Anforderung weiterhin einen ersten Identifizierer umfasst und das Verfahren weiterhin Folgendes umfasst:
falls der erste Identifizierer gültig ist, Ausführen zum Empfangen einer zweiten Anforderung mit einem Identifizierer und einer Sammlung von Terminalnummern,
die in der Anforderung geführt werden; ansonsten Löschen des MMS-Inhalts.

8. Verfahren zum Übertragen von MMS-Nachrichten in Gruppen nach Anspruch 5, wobei die zweite Anforderung weiterhin einen ersten Identifizierer umfasst und das Verfahren weiterhin Folgendes umfasst:
falls der erste Identifizierer gültig ist, Wiederholen des Empfangens einer nächsten Anforderung mit einem Identifizierer und einer Sammlung von Terminalnummern,
die in der Anforderung geführt werden; und
Suchen nach dem MMS-Inhalt gemäß dem Identifizierer in der nächsten Anforderung und Senden des MMS-Inhalts an die Terminals in der Sammlung von Terminalnummern; ansonsten Löschen des MMS-Inhalts.

9. Verfahren zum Übertragen von MMS-Nachrichten in Gruppen nach Anspruch 5, wobei die erste Anforderung weiterhin einen Zeitsteuerparameter umfasst und das Verfahren weiterhin Folgendes umfasst:
falls die zweite Anforderung einen Identifizierer und eine Sammlung von Terminalnummern innerhalb der von dem Zeitsteuerparameter gesetzten Zeit führt,
der Prozess des Suchens nach dem MMS-Inhalt gemäß dem Identifizierer in der zweiten Anforderung und Sendens des MMS-Inhalts an die Terminals in der Sammlung von Terminalnummern wird ausgeführt; ansonsten Löschen des gespeicherten MMS-Inhalts.

10. Verfahren zum Übertragen von MMS-Nachrichten in Gruppen nach Anspruch 8 oder 9, wobei das Verfahren weiterhin Folgendes umfasst:
falls das MMSC eine Misserfolgsantwort an den VASP zurückschickt und das MMSC bestimmt, dass der Boolesche Wert des ersten Identifizierers "wahr" ist,
Warten durch das MMSC darauf, dass der VASP die nachfolgenden Nachrichten innerhalb der von dem Zeitsteuerparameter gesetzten Zeit unterbreitet, und
Wiederholen des Empfangens einer zweiten Anforderung mit einem Identifizierer und einer Sammlung von Terminalnummern, die in der Anforderung geführt werden; ansonsten Löschen des gespeicherten MMS-Inhalts.

11. VASP-System, umfassend:
eine Nachrichtensendevorrichtung (601), die dafür ausgelegt ist, eine MMS-Nachricht an das MMSC zu senden; **dadurch gekennzeichnet, dass** das VASP-System Folgendes umfasst:
eine erste-MMS-Inhaltsidentifizierer-Erhaltungsvorrichtung (603), die dafür ausgelegt ist, einen von dem MMSC für den MMS-Inhalt gesetzten Identifizierer zu empfangen; und
eine Signalsendevorrichtung (605), die dafür ausgelegt ist, eine Nachricht, die eine Sammlung von Terminalnummern der Empfänger und den Identifizierer führt, an das MMSC zu senden.

12. VASP-System nach Anspruch 11, weiterhin umfassend:
eine Gruppenübertragungsverhandlungsvorrichtung (607), die dafür ausgelegt ist,
eine MMS-Crruppenübertragungsfähigkeitsverhandlungsanforderung an das MMSC zu senden;
eine Nachrichtenempfangsvorrichtung (609), die dafür ausgelegt ist, eine Antwortnachricht über eine Unterstützung der Gruppenübertragung von von dem MMSC gesendeten Schnittstellennachrichten zu empfangen; und
die Nachrichtensendevorrichtung (601), die dafür ausgelegt ist, MMS-Nachrichten gemäß der Antwortnachricht an das MMSC zu senden.

13. MMS-Verteilungsplattform (701), umfassend:
eine Nachrichtenverarbeitungsvorrichtung (7011), die dafür ausgelegt ist, eine von einem VASP-System gesendete MMS-Nachricht zu empfangen und die MMS-Nachricht an ein MMSC zu senden;
eine erste MMS-Inhaltsidentifizierer-Erhaltungsvorrichtung (7015), die dafür ausgelegt ist, einen von dem MMSC für den MMS-Inhalt gesetzten Identifizierer zu empfangen;
eine Zahlenerhaltungsvorrichtung (7013), die dafür ausgelegt ist, eine Empfängerterminalnummersammlung der MMS-Nachricht zu erhalten; und
eine Signalsendevorrichtung (7017), die dafür ausgelegt ist, eine Nachricht, die die Sammlung von Empfängerterminalnummern und den Inhaltsidentifizierer führt, an das MMSC zu senden.

14. MMS-Verteilungsplattform nach Anspruch 13, umfassend:
eine Gruppenübertragungsverhandlungsvorrichtung (7019), die dafür ausgelegt ist,
eine MMS-Crruppenübertragungsfähigkeitsverhandlungsanforderung an das MMSC zu senden; und
eine Nachrichtenempfangsvorrichtung (7021), die dafür ausgelegt ist, eine Antwortnachricht über eine Unterstützung der Gruppenübertragung von von dem MM SC gesendeten Schnittstellennachrichten zu empfangen;
die Nachrichtenverarbeitungsvorrichtung (7011), die dafür ausgelegt ist, die von dem VASP-System gesendete MMS-Nachricht zu empfangen und die MMS-Nachricht gemäß der Antwortnachricht an das MMSC zu senden.

15. MMSC (703), **dadurch gekennzeichnet, dass** das MMSC Folgendes umfasst:
eine Vorrichtung (7031) zum Generieren eines MMS-Inhaltsidentifizierers, die dafür ausglegt ist, die MMS-Nachricht zu empfangen, einen von einem VASP-System empfangenen MMS-Inhalt zu speichern, einen Identifizierer für die MMS-Inhalte zu setzen und den Identifizierer an den Sender der MMS-Nachricht zu senden;
eine Signalempfangsvorrichtung, die dafür ausgelegt ist, die Nachricht, die eine Sammlung Terminalnummern und einen Identifizierer führt, von dem Sender der MMS-Nachricht zu empfangen; und
eine Signalverarbeitungsvorrichtung (7033), die dafür ausgelegt ist, MMS-Inhalt gemäß dem Identifizierer zu erhalten und den MMS-Inhalt an die durch die Nummern in der Sammlung von Terminalnummern angegebenen Terminals zu senden.

## Revendications

1. Système de transmission de messages de Service de Messages Multimédia (MMS) en groupes, comprenant un Centre de Service de Messages Multimédia (MMSC), et un système de Fournisseur de Service à Valeur ajoutée (VASP), **caractérisé en ce que**, dans le système de transmission de messages MMS en groupes :
le MMSC comprend en outre un appareil de génération d'identifiant de contenu MMS connecté au système VASP et adapté pour :
recevoir un message MMS depuis le système VASP, établir un identifiant du contenu MMS, et envoyer l'identifiant au système VASP ;
le MMSC est adapté en outre pour stocker le contenu MMS reçu du système VASP ;
le système VASP est adapté pour envoyer au MMSC un message portant une collection de numéros de terminaux et l'identifiant ; et
le MMSC est adapté en outre pour obtenir le contenu MMS en fonction de l'identifiant, et envoyer le contenu MMS aux terminaux indiqués dans la collection de numéros de terminaux.

2. Système de transmission de messages MMS en groupes selon la revendication 1, dans lequel :
le système VASP est adapté en outre pour envoyer le premier identifiant au MMSC ; et
le MMSC est adapté en outre pour déterminer si le premier identifiant est valable ou pas ;
si le premier identifiant est valable, le MMSC continue d'attendre du système VASP un message de requête suivant portant un identifiant et une nouvelle collection de numéros de terminaux ;
si le premier identifiant n'est pas valable, le MMSC supprime le contenu MMS.

3. Système de transmission de messages MMS en groupes selon la revendication 1, dans lequel :
le système VASP est adapté en outre pour envoyer des paramètres de contrôle de temps au MMSC ; et
le MMSC est adapté en outre pour :
après que l'appareil de génération d'identifiant de contenu MMS envoie l'identifiant au système VASP, déterminer si le système VASP soumet ou non au MMSC un nouveau message de requête portant un identifiant et une collection de numéros de terminaux dans le temps établi par le paramètre de contrôle de temps : si le nouveau message de requête est soumis, le MMSC envoie le contenu MMS aux terminaux indiqués dans la collection de numéros de terminaux portée dans le nouveau message de requête ; sinon, le MMSC supprime le contenu MMS.

4. Système de transmission de messages MMS en groupes selon la revendication 1, dans lequel : le système VASP comprend un appareil de négociation de transmission groupée, et le MMSC comprend un appareil de détermination de transmission groupée :
l'appareil de négociation de transmission groupée est adapté pour envoyer une requête de négociation de capabilité de transmission groupée MMS à l'appareil de détermination de transmission groupée ;
l'appareil de détermination de transmission groupée est adapté pour recevoir la requête de négociation de capabilité de transmission groupée MMS, et déterminer si le MMSC comprend ou non un appareil de génération d'identifiant de contenu MMS ; si le MMSC comprend l'identifiant de contenu MMS, l'appareil de détermination de transmission groupée active l'appareil de génération d'identifiant de contenu MMS, et envoie au système VASP un message d'activation de l'appareil de génération d'identifiant de contenu MMS ; et
le système VASP est adapté pour envoyer un message MMS au MMSC après avoir reçu le message d'activation de l'appareil de génération d'identifiant de contenu MMS.

5. Procédé de transmission de messages MMS en groupes, **caractérisé en ce que** le procédé comprend :
la réception, depuis un Fournisseur de Service à Valeur Ajoutée, VASP, d'une première requête, portant le contenu MMS et une collection de numéros de terminaux ;
le stockage du contenu MMS et l'établissement d'un identifiant pour le contenu MMS, et le renvoi au VASP d'une réponse portant l'identifiant ;
l'envoi du contenu MMS aux terminaux figurant dans la collection de numéros de terminaux dans la première requête ;
la réception d'une seconde requête, portant un identifiant et une collection de numéros de terminaux ; et
la recherche du contenu MMS en fonction de l'identifiant dans la seconde requête, et l'envoi du contenu MMS aux terminaux figurant dans la collection de numéros de terminaux de la seconde requête.

6. Procédé de transmission de messages MMS en groupes selon la revendication 5, dans lequel la réception d'une première requête portant le contenu MMS et une collection de numéros de terminaux est exécutée après :
la réception d'une requête de négociation de capabilité de transmission groupée MMS, et la détermination du fait que le MMSC supporte ou non la transmission groupée de messages MMS ; et
si le MMSC supporte la transmission groupée, l'envoi d'une réponse de support au système VASP.

7. Procédé de transmission de messages MMS en groupes selon la revendication 5, dans lequel : la première requête comprend en outre un premier identifiant, et le procédé comprend en outre :
si le premier identifiant est valable, la réception d'une seconde requête portant un identifiant et une collection de numéros de terminaux ; sinon, la suppression du contenu MMS.

8. Procédé de transmission de messages MMS en groupes selon la revendication 5, dans lequel la seconde requête comprend en outre un premier identifiant, et le procédé comprend en outre :
si le premier identifiant est valable, la répétition de la réception d'une requête suivante portant un identifiant et une collection de numéros de terminaux ; et
la recherche du contenu MMS en fonction de l'identifiant dans la requête suivante, et l'envoi du contenu MMS aux terminaux figurant dans la collection de numéros de terminaux ; sinon, la suppression du contenu MMS.

9. Procédé de transmission de messages MMS en groupes selon la revendication 5, dans lequel la première requête comprend en outre un paramètre de contrôle de temps ; et le procédé comprend en outre :
si la seconde requête porte un identifiant et une collection de numéros de terminaux dans le temps établi par le paramètre de contrôle de temps,
le processus de recherche du contenu MMS en fonction de l'identifiant dans la seconde requête, et d'envoi du contenu MMS aux terminaux figurant dans la collection de numéros de terminaux ; sinon, la suppression du contenu MMS stocké.

10. Procédé de transmission de messages MMS en groupes selon la revendication 8 ou la revendication 9, le procédé comprenant en outre :
si le MMSC renvoie une réponse d'échec au VASP et le MMSC détermine que la valeur booléenne du premier identifiant est "vraie", l'attente, par le MMSC, de la soumission par le VASP des messages suivants dans le temps établi par le paramètre de contrôle de temps, et la répétition de la réception d'une seconde requête portant un identifiant et une collection de numéros de terminaux ; sinon la suppression du contenu MMS stocké.

11. Système VASP, comprenant :
un appareil d'envoi de message (601), adapté pour envoyer un message MMS au MMSC, **caractérisé en ce que** le système VASP comprend :
un premier appareil d'obtention d'identifiant de contenu MMS (603), adapté pour recevoir un identifiant établi par le MMSC pour le contenu MMS ; et
un appareil d'envoi de signalisation (605), adapté pour envoyer au MMSC un message portant une collection de numéros de terminaux des destinataires et l'identifiant.

12. Système VASP selon la revendication 11, comprenant en outre :
un appareil de négociation de transmission groupée (607), adapté pour envoyer au MMSC une requête de négociation de capabilité de transmission groupée MMS ;
un appareil de réception de message (609), adapté pour recevoir un message de réponse relatif au support de la transmission groupée de messages d'interface envoyés par le MMSC ; et
l'appareil d'envoi de message (601), adapté pour envoyer des messages MMS au MMSC en fonction du message de réponse.

13. Plate-forme de distribution MMS (701), comprenant :
un appareil de traitement de messages (7011), adapté pour recevoir un message MMS envoyé par un système VASP et envoyer le message MMS à un MMSC ;
un premier appareil d'obtention d'identifiant de contenu MMS (7015), adapté pour recevoir un identifiant pour le contenu MMS établi par le MMSC ;
un appareil d'obtention de numéros (7013), adapté pour obtenir une collection de numéros de terminaux destinataires du message MMS ; et
un appareil d'envoi de signalisation (7017), adapté pour envoyer au MMSC un message portant la collection de numéros de terminaux destinataires et l'identifiant de contenu.

14. Plate-forme de distribution MMS selon la revendication 13, comprenant :
un appareil de négociation de transmission groupée (7019), adapté pour envoyer au MMSC une requête de négociation de capabilité de transmission groupée MMS ; et
un appareil de réception de message (7021), adapté pour recevoir un message de réponse relatif au support de la transmission groupée de messages d'interface envoyés par le MMSC ;
l'appareil de traitement de message (7011), adapté pour recevoir le message MMS envoyé par le système VASP ; et envoyer le message MMS au MMSC en fonction du message de réponse.

15. MMSC (703), **caractérisé en ce que** le MMSC comprend :
un appareil de génération d'identifiant de contenu MMS (7031), adapté pour recevoir le message MMS, stocker un contenu MMS reçu d'un système VASP, établir un identifiant du contenu MMS, et envoyer l'identifiant à l'expéditeur du message MMS ;
un appareil de réception de signalisation, adapté pour recevoir de l'expéditeur du message MMS le message portant une collection de numéros de terminaux et un identifiant ; et
un appareil de traitement de signalisation (7033), adapté pour obtenir le contenu MMS en fonction de l'identifiant, et envoyer le contenu MMS aux terminaux indiqués par les numéros dans la collection de numéros de terminaux.
